# EUROPÄISCHE PATENTSCHRIFT

(11) **EP 0 806 427 B1**
(45) Veröffentlichungstag und Bekanntmachung des Hinweises auf die Patenterteilung: **19.02.2003**
(21) Anmeldenummer: 97104745.1
(22) Anmeldetag: 20.03.1997
(51) Int. Cl.: C07F 7/14, C07F 7/08, C07F 7/21

(54) **Verfahren zur Herstellung von vinylierten Silicium-organischen Verbindungen**
Process for preparing organosilicon compounds with a vinyl group
Procédé pour la préparation de composés organosiliciques à fonction vinylique

(30) Priorität: 11.05.1996 DE 19619138
(43) Veröffentlichungstag der Anmeldung: 12.11.1997
(73) Patentinhaber: Degussa AG, 40474 Düsseldorf (DE)
(72) Erfinder: Steding, Frank, Dr., 45768 Marl (DE)

(56) Entgegenhaltungen:
- EP-A- 0 409 141
- DE-A- 2 131 742
- GB-A- 822 830
- PATENT ABSTRACTS OF JAPAN vol. 005, no. 106 (C-062), 10. Juli 1981 (1981-07-10) & JP 56 046888 A (SHIN ETSU CHEM CO LTD), 28. April 1981 (1981-04-28)

## Beschreibung

Die Erfindung betrifft ein Verfahren zur Herstellung von Silicium-organischen Verbindungen, die mindestens eine H₂C=CH-Si-Gruppe enthalten, durch Umsetzung von einer Silicium-organischen Verbindung, die mindestens eine H-Si-Gruppe enthält, mit Acetylen in einer Gas-/Flüssigphase in Gegenwart mindestens eines Anlagerungskatalysators und Gewinnung der Silicium-organischen Verbindung, die mindestens eine H₂C=CH-Si-Gruppe enthält, aus dem Reaktionsgemisch.

Es ist bekannt, daß man Vinylhalogensilane durch Umsetzung von Acetylen mit einem Halogensilan, das 1 oder 2 Wasserstoffatome am Silicium gebunden und gegebenenfalls einen inerten einwertigen organischen Rest enthält, in Gegenwart eines Platinkatalysators erhält, wenn man die Reaktion in der Wärme, d. h. in einem Temperaturbereich von 80 bis 120 °C, in einem flüssigen Verdünnungsmittel und unter atmosphärischem Druck durchführt. So offenbart die DE-PS 12 32 580, daß man dieses Verfahren chargenweise oder kontinuierlich durchführen kann und man vorzugsweise nur mit einem schwachen Überschuß an Acetylen, bezogen auf die stöchiometrische Menge des eingesetzten Halogensilans mit H-Si-Bindung, arbeitet. Nach diesem Verfahren erhält man gemäß der Beispiele der DE-PS 12 32 580 Produktausbeuten von rund 80 % bis hin zu 91 %.

Die DE-OS 21 31 742 lehrt ein Verfahren zur Herstellung von Alkenylsilanen, wobei die Anlagerung von gegebenenfalls substituiertem Acetylen an Silane in Disilylethanen bei 120 bis 220 °C und 0,1 bis 5,0 Atmosphären Überdruck durchgeführt und das erhaltene Alkenylsilan im Maße seiner Bildung stetig und nur gasförmig aus dem Reaktionsraum entfernt wird. Als bevorzugtes Katalysatorsystem werden hier die Umsetzungsprodukte von Platin-(IV)-chlorosäure mit Ketonen verwendet.

JP-A 56-046 888 (1981) beschreibt die Darstellung halogenierter Vinylsilane durch Hydrosilylierung von Acetylen in Gegenwart eines Platinkatalysators, wobei hier, wie auch bei den zuvor genannten Verfahren überschüssiges Acetylen wieder in den Prozeß zurückgeführt werden kann. Es ist bekannt, daß man dazu in der Regel einen Kreisgasverdichter verwendet.

Den zuvor genannten Verfahren ist gemeinsam, daß die Anlagerung eines Acetylens an ein Silan, das mindestens eine H-Si-Gruppe enthält, in Kesselreaktoren oder Reaktionstürmen erfolgt, wobei man bestrebt war, für eine möglichst große Stoffaustauschfläche und hinreichende Verweilzeiten zu sorgen. Solche Anlagen sind im allgemeinen kostenintensiv.

In neueren Untersuchungen hinsichtlich der Hydrosilylierung von Acetylen und Trichlorsilan verwendet man immobilisierte Platin-Komplex-Katalysatoren. Erzielt werden hierbei Ausbeuten von 80 % bei 100 % Selektivität bezüglich Vinyltrichlorsilan; [*Catalysis of hydrosilylation, Part XXII', Applied Organometallic Chemistry Vol. 7 (1993), S. 207-212*]. Ferner ist die Herstellung solcher Katalysatoren vergleichsweise aufwendig.

Ein wichtiger Wirtschaftlichkeitsfaktor bei den Anlagerungsreaktionen in den besagten Verfahren sind auch die Verluste an Acetylenen, die aufgrund nicht umgesetzter Acetylenmengen auftreten, wobei diese dann in der Regel mit dem Abgas aus dem Prozeß entfernt und beispielsweise einer thermischen Verwertung in Form einer Verbrennungsanlage zugeführt werden.

Der vorliegenden Erfindung lag die Aufgabe zugrunde, ein Verfahren bereitzustellen, das es ermöglicht, Silicium-organische Verbindungen, die mindestens eine H₂C=CH-Si-Gruppe enthalten, in möglichst einfacher und wirtschaftlicher Weise herzustellen.

Die gestellte Aufgabe wird erfindungsgemäß entsprechend den Angaben der Patentansprüche gelöst.

Es wurde nun gefunden, daß man durch Umsetzung von einer Silicium-organischen Verbindung, die mindestens eine H-Si-Gruppe enthält, mit Acetylen in einer Gas-/Flüssigphase in Gegenwart mindestens eines Anlagerungskatalysators und Gewinnung der Silicium-organischen Verbindung, die mindestens eine H₂C=CH-Si-Gruppe enthält, aus dem Reaktionsgemisch eine solche Silicium-organische Verbindung, die mindestens eine H₂C=CH-Si-Gruppe enthält, in einfacher und wirtschaftlicher Weise herstellen kann, wenn man eine Silicium-organische Verbindung, die mindestens eine H-Si-Gruppe enthält, das Acetylen, das im Überschuß eingesetzt wird, und eine weitgehend inerte Flüssigphase in einem Strahldüsenschlaufenreaktor in Gegenwart eines Katalysators innigst zusammenbringt und die Silicium-organische Verbindung, die mindestens eine H₂C=CH-Si-Gruppe enthält, nachfolgend aus dem Reaktionsgemisch gewinnt und das überschüssige Acetylen in den Prozeß zurückführt.

Beim vorliegenden Verfahren wird durch die erfindungsgemäße Verwendung eines Strahldüsenschlaufenreaktors zur Herstellung von Silicium-organischen Verbindungen, die mindestens eine H₂C=CH-Si-Gruppe enthalten, für einen nahezu optimalen Stoffübergang und gleichzeitig weitestgehend schonende Reaktionsbedingungen gesorgt, so daß beim erfindungsgemäßen Verfahren eine hohe Selektivität erzielt wird, d. h., daß unerwünschte Neben- sowie Folgereaktionen weitgehend vermieden und hohe Ausbeuten realisiert werden, um das Verfahren wirtschaftlich nutzen zu können.

Das vergleichsweise einfache erfindungsgemäße Verfahren zeichnet sich somit durch große Raumzeitausbeuten aus, d. h., hier werden sehr hohe Selektivitäten bei nahezu 100 % Umsatz bezüglich der H-Si-Gruppen-haltigen Edukte erzielt.

Ferner ist das erfindungsgemäße Verfahren besonders wirtschaftlich, da überschüssig eingesetztes Acetylen in den Prozeß zurückgeführt und darüber hinaus auch ohne den Einsatz eines Kreisgasverdichters für die Acetylenrückführung betrieben werden kann, d. h., neben minimalen Acetylenverlusten bietet das vorliegende Verfahren insbesondere in wirtschaftlicher Hinsicht die zusätzliche Möglichkeit, auf das Investment für einen Kreisgasverdichter zu verzichten.

Gegenstand der vorliegenden Erfindung ist somit ein Verfahren zur Herstellung von Silicium-organischen Verbindungen, die mindestens eine H₂C=CH-Si-Gruppe enthalten, durch Umsetzung von einer Silicium-organischen Verbindung, die mindestens eine H-Si-Gruppe enthält, mit Acetylen in einer Gas-/Flüssigphase in Gegenwart mindestens eines Anlagerungskatalysators und Gewinnung der Silicium-organischen Verbindung, die mindestens eine H₂C=CH-Si-Gruppe enthält, aus dem Reaktionsgemisch, das dadurch gekennzeichnet ist, daß man eine Silicium-organische Verbindung, die mindestens eine H-Si-Gruppe enthält, das Acetylen, das im Überschuß eingesetzt wird, und eine weitgehend inerte Flüssigphase in einem Strahldüsenschlaufenreaktor in Gegenwart eines Katalysators innigst zusammenbringt und die Silicium-organische Verbindung, die mindestens eine H₂C=CH-Si-Gruppe enthält, nachfolgend aus dem Reaktionsgemisch gewinnt und das überschüssige Acetylen in den Prozeß zurückführt.

Strahldüsen- bzw. Strahldüsenschlaufenreaktoren, wie sie geeigneterweise auch im erfindungsgemäßen Verfahren eingesetzt werden können, sowie deren allgemeine Wirkungsweise sind u. a. den nachfolgenden Literaturstellen zu entnehmen: *Nagel et al. CIT 42 (1970) S. 474-479; Nagel et al. CIT 42 (1970) S. 921-926; Hübner CT 16 (1987) S. 87-92; Warnecke et al. CIT 59 (1987) S. 798-799. Eine bevorzugte* Ausführungsform des beim erfindungsgemäßen Verfahren eingesetzten Reaktors ist z. B. der Strahldüsenschlaufenreaktor der Bauart "System BURDOSA", der Firma Burdosa, Deutschland, geeigneterweise können aber auch baugleiche oder ähnliche Typen eingesetzt werden.

Das erfindungsgemäße Verfahren erfolgt im allgemeinen so, daß man zunächst die Silicium-organische Verbindung, die mindestens eine H-Si-Gruppe enthält, mit dem Acetylen und/oder mit der Flüssigphase dem Strahldüsenschlaufenreaktor zuführt.

Dem Prozeß wird das Acetylen vorzugsweise mit einem Betriebsdruck von > 1 bar abs. und ≤ 1,4 bar abs. zugeführt.

Beim erfindungsgemäßen Verfahren kann man als Silicium-organische Verbindungen, die mindestens eine H-Si-Gruppe enthalten, solche gemäß der allgemeinen Formel I

Rₐ X_{b} H_{(4-a-b-c)} Si Y_{c} (I),

mit
- R :: Alkyl- mit 1 bis 8 C-Atomen, Halogenalkyl-, vorzugsweise mit F oder Cl, sowie
Aryl-Gruppe, beispielsweise Phenyl-, Benzyl- sowie Naphthyl-, wobei R gleich oder verschieden ist,
- X :: Cl-, OH-, Alkoxy-Gruppe mit 1 bis 4 C-Atomen,
- Y :: -((CH₂)_{d} Si R₂')ₑ(CH₂)_{d} Si R₃', mit R': H, R sowie X,
wobei R' gleich oder verschieden ist und d = 1, 2, 3 oder 4 und e = 0, 1 oder 2 sind,
- a :: 0, 1, 2 oder 3,
- b :: 0, 1, 2 oder 3,
- c :: 0 oder 1, wobei (a+b+c) ≤ 3 ist,
beispielsweise Hydrogensilane wie Dimethylchlorsilan, Methyldichlorsilan, Dichlorsilan, 1,1,4,4-Tetramethyldisilylethylen, Trichlorsilan,
oder solche gemäß der allgemeinen Formel II

Rₐ X_{b} H_{(3-a-b)} Si Y (II),

mit
- R :: Alkyl- mit 1 bis 8 C-Atomen, Halogenalkyl-, vorzugsweise F oder Cl, sowie Aryl-Gruppe, beispielsweise Phenyl-, Benzyl- sowie Naphthyl-, wobei R gleich oder verschieden ist,
- X :: Cl-, OH-, Alkoxy-Gruppe mit 1 bis 4 C-Atomen,
- Y :: (-O-Si R₂')_{f}-O-Si R₃', mit R': H, R sowie X, wobei R' gleich oder verschieden ist und f= 0, 1, 2, 3, 4 oder 5 ist,
- a :: 0, 1 oder 2,
- b :: 0, 1 oder 2, wobei (a+b) ≤ 2 ist,
beispielsweise Hydrogensiloxane wie 1,1,3,3-Tetramethyldisiloxan,
oder auch Hydrogensilazane, beispielsweise 1,1,3,3-Tetramethyldisilazan,
oder auch solche der allgemeinen Formel III

[R_{q} Xᵣ H_{(2-q-r)} Si-O-]ₛ (III),

mit
- R :: Alkyl- mit 1 bis 8 C-Atomen, Halogenalkyl-, vorzugsweise mit F oder Cl, sowie Aryl-Gruppe, beispielsweise Phenyl-, Benzyl-, Naphthyl-, wobei R gleich oder verschieden ist,
- X :: Cl-, OH-, Alkoxy-Gruppe mit 1 bis 4 C-Atomen,
- q :: 0 oder 1,
- r :: 0 oder 1, wobei (q+r) ≤ 1 ist,
- s :: 3 oder 4,
beispielsweise cyclische Hydrogensiloxane wie 1,3,5,7-Tetramethylcyclotetrasiloxan, einsetzt.

Beim erfindungsgemäßen Verfahren setzt man als Silicium-organische Verbindung vorzugsweise Methyldichlorsilan- oder Dimethylchlorsilan- oder deren Gemische enthaltende Edukte oder Dichlorsilan oder Tetramethyldisiloxan ein.

Das molare Verhältnis von Acetylen zu der jeweiligen Silicium-organischen Verbindung, die mindestens eine H-Si-Gruppe enthält, stellt man beim erfindungsgemäßen Verfahren geeigneterweise auf einen Wert zwischen 1,5 : 1 bis 20 : 1 ein.

Vorzugsweise überführt man die Silicium-organische Verbindung, die mindestens eine H-Si-Gruppe enthält, und das Acetylen vor der Zuführung in den Strahldüsenschlaufenreaktor in ein gasförmiges Gemisch. Das vorliegende Gas bzw. Gemisch wird im allgemeinen über die Mischdüse angesaugt, auf den Systemdruck verdichtet und in der Mischdüse mit der zugeführten Flüssigphase vermischt. Diese Flüssigphase wird der Mischdüse geeigneterweise über eine Hochleistungspumpe zugeführt. Im Strahldüsenschlaufenreaktor, insbesondere im Schlaufenbereich, können dann Gas-/Gemisch und Flüssigphase innigst vermischt werden. Geeigneterweise wärmt man die weitgehend inerte Flüssigphase vor der Zuführung in den Strahldüsenschlaufenreaktor vor. Beim erfindungsgemäßen Verfahren betreibt man den Strahldüsenschlaufenreaktor in der Regel bei einer Temperatur im Bereich zwischen 50 und 200 °C, vorzugsweise zwischen 70 und 140 °C, wobei der Systemdruck im Strahldüsenschlaufenreaktor geeigneterweise zwischen > 1 bar abs. und 4 bar abs., vorzugsweise zwischen 2 und 3 bar abs., liegt. Der maximale Systemdruck ist durch sicherheitstechnische Überlegungen begrenzt und durch die anerkannten technischen Regeln zur Handhabung von Acetylen unter Druck bei den jeweiligen Temperaturen festgelegt. Diese Grenzen stimmen nicht mit den Druck/Temperatur-Grenzkurven zum Selbstzerfall von Acetylen überein.

Als Flüssigphase setzt man beim erfindungsgemäßen Verfahren geeigneterweise ein weitgehend inertes Lösemittel oder Lösemittelgemisch ein. Vorzugsweise besitzt das jeweilige Lösemittel in der Flüssigphase einen höheren Siedepunkt als die Silicium-organische Verbindung, welche aus dem Reaktionsgemisch gewonnen wird und mindestens eine H₂C=CH-Si-Gruppe enthält. Als Lösemittel eignen sich beispielsweise Mesitylen, Wärmeträgeröle, insbesondere Tritoluol, wie z. B. MARLOTHERM®. Die Flüssigphase kann aber auch sogenannte "Bisaddukte" der Vinylierung enthalten.

Als Anlagerungskatalysator kann man beim erfindungsgemäßen Verfahren sowohl einen heterogenen als auch homogenen Katalysator einsetzen. Als Heterogenkatalysatoren seien hier beispielsweise solche Katalysatoren angeführt, wie sie den DE-PSS 40 35 032 und 40 35 033 zu entnehmen sind. Einen Heterogenkatalysator ordnet man beim erfindungsgemäßen Verfahren geeigneterweise im Strahldüsenschlaufenreaktor an, beispielsweise als Festbett. Dem Festbett können auch inerte Mischelemente sowie Strömungsverbesserer beigefügt sein. Einen Homogenkatalysator löst man geeigneterweise in der beim vorliegenden Verfahren eingesetzten Flüssigphase. Um ausreichende Mengen an frischem Homogenkatalysator für die Umsetzung verfügbar zu haben, kann es erforderlich sein, Lösemittel mit Frischkatalysator im Verfahren wieder zuzuführen und in gleichem Maße verbrauchte Flüssigphase auszuschleusen. Platin-haltige Katalysatoren haben sich beim erfindungsgemäßen Verfahren besonders bewährt, es können aber auch andere Edelmetallkatalysatoren, beispielsweise Rh-Katalysatoren, eingesetzt werden.

Dem Strahldüsenschlaufenreaktor kann im erfindungsgemäßen Verfahren eine Kondensationseinheit nachgeschaltet sein, um das Reaktionsgemisch - Lösemittel/ggf. "Bis-addukt"/ggf. Katalysator/Produkt und Acetylen sowie ggf. weitere ähnlich flüchtige Komponenten - grob zu trennen, wobei das hierbei separierte Acetylen unter Druckerhaltung als Einsatzstoff wieder zurückgeführt werden kann. Die Aufarbeitung des Reaktionsgemisches, d. h. des Rohprodukts, zur Gewinnung der Silicium-organischen Verbindung, welche mindestens eine H₂C=CH-Si-Gruppe enthält, wird im allgemeinen destillativ durchgeführt, wobei man die dabei im Sumpf anfallende Flüssigphase zum überwiegenden Teil in den Prozeß zurückführt. Die destillative Aufarbeitung kann beim erfindungsgemäßen Verfahren in einer ein- oder mehrstufigen Destillation durchgeführt werden, beispielsweise setzt man hier Dünnschichtverdampfer und/oder Destillationskolonnen ein.

Ferner kann man beim erfindungsgemäßen Verfahren die Aufarbeitung des Reaktionsgemisches auch unter vermindertem Druck durchführen. So besteht beim vorliegenden Verfahren auch die Möglichkeit, mono-vinylierte, di-vinylierte sowie mehrfach-vinylierte Silicium-organische Verbindung zu gewinnen, wobei man das erfindungsgemäße Verfahren im allgemeinen kontinuierlich durchführt. Dem Prozeß kann auch eine Katalysatoraufarbeitung zur Regeneration des Katalysators sowie zur Rückgewinnung des Edelmetalls beigeschaltet werden.

Nach dem erfindungsgemäßen Verfahren können Silicium-organische Verbindungen, wie z. B. Vinylmethyldichlorsilan, Vinyldimethylchlorsilan, Divinyldichlorsilan, Vinylund Divinyltetramethyldisiloxan hergestellt werden.

Beim erfindungsgemäßen Verfahren werden im allgemeinen Ausbeuten über den Prozeß, bezogen auf die eingesetzte Silicium-organische Verbindung, von rund 95 bis 98 % realisiert.

Die Erfindung wird durch die nachfolgenden Beispiele näher erläutert:

### Beispiele:

### Beispiel 1:

Einem kontinuierlich betriebenen Strahldüsenschlaufenreaktor (R 1) werden 0,8 mol/h flüssiges Methyldichlorsilan (S 1) über die Pumpe (P 1) und den Verdampfer (W 1) zusammen mit Frisch-Acetylen (C₂H₂) zugeführt. Vor dem Eintritt in den Verdampfer erfolgt die Vermischung des Frisch-Acetylens mit dem Acetylen-Kreislaufstrom (S 8).

Die Reaktionstemperatur beträgt 80 °C, der Druck 1,5 bar abs. Dabei wird ein Lösemittelkreislauf (S 9) von ca. 80 l/h über die Kreislaufpumpe (P 3) gefahren und vor dem Eintritt in die Strahldüse (R 1) auf ca. 10 bar abs. verdichtet.

Aus dem Reaktor (R 1) tritt ein Zweiphasenstrom (S 10), bestehend aus dem Acetylenüberschuß und dem flüssigen Reaktionsprodukt aus. Die Konzentration von Vinylmethyldichlorsilan beträgt ca. 15 Gew.-%.

In der Phasentrennung (B 1) werden Acetylen und das Produktgemisch, bestehend aus dem gewünschten Vinylsilan sowie Vor- und Nachlaufkomponenten, vom Lösemittel getrennt. Das Lösemittel gelangt über die Pumpe (P 3) in den Lösemittelkreislauf (S 9) zurück.

Im Kondensator (W 2) wird das Produktgemisch kondensiert und als Zulauf (S 11) über die Pumpe (P 4) der Destillationskolonne (D 1) zugeführt. Der Acetylenüberschuß gelangt über den Kreislauf (S 8) erneut in den Reaktor. Über das Ventil (V 2) wird der Systemdruck im Reaktor (R 1) geregelt. Restgas verläßt die Anlage über den Restgasauslaß (S 3).

Aus dem Sumpf der Kolonne (D 1) werden mitgerissenes Lösemittel sowie Hochsieder, z. B. in der Reaktion gebildetes "Bisaddukt" (1,4-Dimethyl-1,1,4,4-Tetrachlor-1,2-Disilan), über die Lösemittelrückführung (S 7) in den Lösemittelkreislauf eingespeist. Aus der Reaktion stammende Hochsieder, z. B. "Bisaddukte", können zusammen mit Lösemittel über den Strom (S 6) ausgeschleust werden. Das Vinylsilan wird in hoher Reinheit am Sumpf (S 5) der Kolonne (D 2) abgenommen.

Der Reaktor wurde zum Anfahren mit reinem Lösemittel, hier Mesitylen, angefahren. Als Katalysator wurde ein üblicher, homogen gelöster Hydrosilylierungskatalysator auf Basis H₂PtCl₆ eingesetzt. Die Pt-Konzentration betrug ca. 3 ppm. Die Zufuhr von Katalysator/Lösemittel (S 2) erfolgt über die Pumpe (P 2).

Bei kontinuierlichem Anlagenbetrieb wird das Lösemittel durch hochsiedende Reaktionsprodukte, z. B. "Bisaddukt" verdünnt. Dabei wird die Selektivität der Vinylierung durch den Anstieg der Hochsieder nicht beeinträchtigt.

Bei einem Silanumsatz von 99 % Methyldichlorsilan konnte eine Ausbeute bezüglich Vinylmethyldichlorsilan von 97 % über den Prozeß erzielt werden.

### Beispiel 2:

In der Apparatur gemäß Beispiel 1 wurde ein Gemisch aus 70 mol-% Methyldichlorsilan und 30 mol-% Isopentan eingesetzt und ebenso wie in Beispiel 1 beschrieben verfahren. Die Silandosierung betrug 0,8 mol/h, der Acetylenstrom 1 mol/h. Bei einem Silanumsatz von 98 % konnte eine Ausbeute bezüglich Vinylmethyldichlorsilan von 97 % erzielt werden.

### Beispiel 3:

In der Apparatur gemäß Beispiel 1 wurde Dimethylchlorsilan eingesetzt. Die Silandosierung betrug 1 mol/h, der Acetylenstrom 1,2 mol/h. Die Reaktionstemperatur betrug 92 °C. Bei einem Silanumsatz von 99,8 % wurde eine Selektivität bezüglich Vinyldimethylchlorsilan von 98 % erzielt.

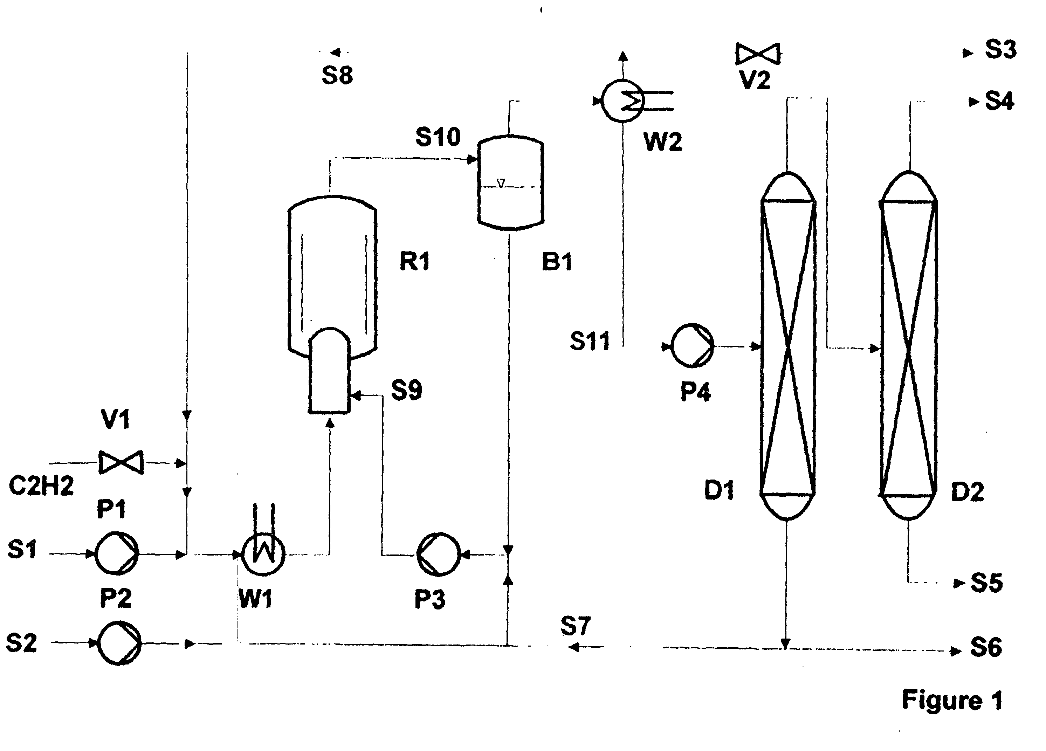

Die Figur 1 zeigt eine bevorzugte Ausführungsform des erfindungsgemäßen Verfahrens:

### Legende zu Figur 1

### Anlagenteile:

- R 1 =: Strahldüsenschlaufenreaktor
- B 1 =: Anlagenteil zur Abtrennung des Lösemittels (ggf. mit Katalysator sowie Si-haltiger Nebenprodukte) vom Rohproduktstrom
- P 1 bis P 4 =: Pumpen zur Förderung der Stoffströme im Prozeß
- D 1 =: Destillationskolonne für Rohproduktdestillation
- D 2 =: Destillationskolonne für Feindestillation
- V 1 =: Ventil zur Einstellung der Acetylenversorgung
- V 2 =: Ventil zur Einstellung der Restgasmenge
- W 1 =: Wärmetauscher einschließlich Mischteil
- W 2 =: Kondensationseinheit zur Trennung des nicht verbrauchten Acetylens vom Rohprodukt

### Stoffströme:

- C₂H₂ =: Acetylenversorgung
- S 1 =: Silicium-organische Verbindung mit mindestens einer H-Si -Gruppe
- S 2 =: Zufuhr für gelösten bzw. suspendierten Frischkatalysator
- S 3 =: Restgasauslaß
- S 4 =: Kopfprodukt der Kolonne D 2
- S 5 =: Sumpfprodukt der Kolonne D 2
- S 6 =: Auslaß für überschüssiges Sumpfprodukt der Kolonne D 1
- S 7 =: Lösemittelrückführung
- S 8 =: Acetylen-Kreislaufstrom
- S 9 =: Lösemittelkreislauf
- S 10 =: Zweiphasenstrom Acetylen/Reaktionsprodukt
- S 11 =: Produktzulauf Destillation

## Patentansprüche

1. Verfahren zur Herstellung von Silicium-organischen Verbindungen, die mindestens eine H₂C=CH-Si-Gruppe enthalten, durch Umsetzung von einer Silicium-organischen Verbindung, die mindestens eine H-Si-Gruppe enthält, mit Acetylen in einer Gas-/Flüssigphase in Gegenwart mindestens eines Anlagerungskatalysators und Gewinnung der Silicium-organischen Verbindung, die mindestens eine H₂C=CH-Si-Gruppe enthält, aus dem Reaktionsgemisch,
**dadurch gekennzeichnet,**
**daß** man eine Silicium-organische Verbindung, die mindestens eine H-Si-Gruppe enthält, das Acetylen, das im Überschuß eingesetzt wird, und eine weitgehend inerte Flüssigphase in einem Strahldüsenschlaufenreaktor in Gegenwart eines Katalysators innigst zusammenbringt und die Silicium-organische Verbindung, die mindestens eine H₂C=CH-Si-Gruppe enthält, nachfolgend aus dem Reaktionsgemisch gewinnt und das überschussige Acetylen in den Prozeß zurückführt

2. Verfahren nach Anspruch 1,
**dadurch gekennzeichnet,**
**daß** man die Silicium-organische Verbindung, die mindestens eine H-Si-Gruppe enthält, mit dem Acetylen und/oder mit der Flüssigphase dem Strahldüsenschlaufenreaktor zuführt.

3. Verfahren nach Anspruch 1 oder 2,
**dadurch gekennzeichnet.**
**daß** man die Silicium-organische Verbindung, die mindestens eine H-Si-Gruppe enthält, und das Acetylen vor der Zuführung in den Strahldüsenschlaufenreaktor in ein gasförmiges Gemisch überführt.

4. Verfahren nach mindestens einem der Ansprüche 1 bis 3,
**dadurch gekennzeichnet,**
**daß** man die weitgehend inerte Flüssigphase vor der Zuführung in den Strahldüsenschlaufenreaktor vorwärmt.

5. Verfahren nach mindestens einem der Ansprüche 1 bis 4,
**dadurch gekennzeichnet,**
**daß** man den Strahldüsenschlaufenreaktor bei einer Temperatur im Bereich zwischen 50 und 200 °C, vorzugsweise zwischen 70 und 140 °C, betreibt.

6. Verfahren nach mindestens einem der Ansprüche 1 bis 5,
**dadurch gekennzeichnet,**
**daß** man das Acetylen mit einem Betriebsdruck von > 1 bar abs. und ≤ 1,4 bar abs dem Prozeß zuführt.

7. Verfahren nach mindestens einem der Ansprüche 1 bis 6,
**dadurch gekennzeichnet,**
**daß** man den Strahldüsenschlaufenreaktor bei einem Systemdruck zwischen > 1 bar abs und dem nach den anerkannten technischen Regeln für Acetylen maximal zulässigen Druck bei der Reaktionstemperatur, vorzugsweise zwischen 1 und 3 bar abs., betreibt.

8. Verfahren nach mindestens einem der Ansprüche 1 bis 7,
**dadurch gekennzeichnet,**
**daß** man als Flüssigphase ein weitgehend inertes Lösemittel oder Lösemittelgemisch einsetzt.

9. Verfahren nach Anspruch 8,
**dadurch gekennzeichnet,**
**daß** das jeweilige Lösemittel in der Flüssigphase einen höheren Siedepunkt besitzt als die Silicium-organische Verbindung, welche aus dem Reaktionsgemisch gewonnen wird und mindestens eine H₂C=CH-Si-Gruppe enthält.

10. Verfahren nach Anspruch 8 oder 9,
**dadurch gekennzeichnet,**
**daß** man als Lösemittel Mesitylen einsetzt.

11. Verfahren nach mindestens einem der Ansprüche 8 bis 10,
**dadurch gekennzeichnet,**
**daß** man als Lösemittel inerte Wänmeträgeröle, vorzugsweise Tritoluol, einsetzt.

12. Verfahren nach mindestens einem der Ansprüche 1 bis 11,
**dadurch gekennzeichnet,**
**daß** man einen homogenen Katalysator einsetzt.

13. Verfahren nach Anspruch 12,
**dadurch gekennzeichnet,**
**daß** man den homogenen Katalysator in der Flüssigphase löst

14. Verfahren nach mindestens einem der Ansprüche 1 bis 11,
**dadurch gekennzeichnet,**
**daß** man einen heterogenen Katalysator einsetzt.

15. Verfahren nach Anspruch 14,
**dadurch gekennzeichnet,**
**daß** man den heterogenen Katalysator im Strahldüsenschlaufenreaktor anordnet.

16. Verfahren nach mindestens einem der Ansprüche 1 bis 15,
**dadurch gekennzeichnet,**
**daß** man einen Platin-haltigen Katalysator einsetzt.

17. Verfahren nach mindestens einem der Anspruche 1 bis 16,
**dadurch gekennzeichnet,**
**daß** man als Silicium-organische Verbindung, die mindestens eine H-Si-Gruppe enthält,
ein Hydrogensilan der allgemeinen Formel I
Rₐ X_{b} H_{(4-a-b-c)} Si Y_{c} (I),
mit
R: Alkyl- mit 1 bis 8 C-Atomen, Halogenalkyl- sowie Aryl-Gruppe, wobei R gleich oder verschieden ist,
X: Cl-, OH-, Alkoxy-Gruppe mit 1 bis 4 C-Atomen,
Y: -((CH₂)_{d} Si R₂')ₑ(CH₂)_{d} Si R₃', mit R': H, R sowie X,
wobei R' gleich oder verschieden ist und d = 1, 2, 3 oder 4 und e = 0, 1 oder 2 sind,
a: 0, 1, 2 oder 3,
b 0, 1, 2 oder 3,
c 0 oder 1, wobei (a+b+c) ≤ 3 ist,
oder ein Hydrogensiloxan der allgemeinen Formel II
Rₐ X_{b} H_{(3-a-b)} Si Y (II),
mit
R: Alkyl- mit 1 bis 8 C-Atomen, Halogenalkyl- sowie Aryl-Gruppe, wobei R gleich oder verschieden ist,
X: Cl-, OH-, Alkoxy-Gruppe mit 1 bis 4 C-Atomen,
Y: (-O-Si R₂')_{f}-O-Si R₃', mit R': H, R sowie X, wobei R' gleich oder verschieden ist und f = 0, 1, 2, 3, 4 oder 5 ist,
a: 0, 1 oder 2,
b: 0, 1 oder 2, wobei (a+b) ≤ ist,
oder ein cyclisches Hydrogensiloxan der allgemeinen Formel III
[R_{q} Xᵣ H_{(2-q-r)} Si-O-]ₛ (III),
mit
R: Alkyl- mit 1 bis 8 C-Atomen, Halogenalkyl- sowie Aryl-Gruppe, wobei R gleich oder verschieden ist,
X: Cl-, OH-, Alkoxy-Gruppe mit 1 bis 4 C-Atomen,
q: 0 oder 1,
r: 0 oder 1, wobei (q + r) ≤ 1 ist,
s: 3 oder 4,
einsetzt.

18. Verfahren nach mindestens einem der Ansprüche 1 bis 17,
**dadurch gekennzeichnet,**
**daß** man als Silicium-organische Verbindung ein im wesentlichen Methyldichlorsilan- oder Dimethylchlorsilan- oder deren Gemische-enthaltendes Edukt oder Dichlorsilan oder Tetramethyldisiloxan einsetzt.

19. Verfahren nach mindestens einem der Ansprüche 1 bis 18,
**dadurch gekennzeichnet,**
**daß** man die Silicium-organische Verbindung, die mindestens eine H-Si-Gruppe enthält, mit einer Reinheit von 10 bis 100 % einsetzt.

20. Verfahren nach mindestens einem der Ansprüche 1 bis 19,
**dadurch gekennzeichnet,**
**daß** man das molare Verhältnis von Acetylen zu der jeweiligen Silicium-organischen Verbindung, die mindestens eine H-Si-Gruppe enthält, auf einen Wert zwischen 1,5 : 1 bis 20 : 1 einstellt.

21. Verfahren nach mindestens einem der Ansprüche 1 bis 20,
**dadurch gekennzeichnet,**
**daß** man die Aufarbeitung des Reaktionsgemisches zur Gewinnung der Silicium-organischen Verbindung, welche mindestens eine H₂C=CH-Si-Gruppe enthält, destillativ durchführt und die dabei im Sumpf anfallende Flüssigphase zum überwiegenden Teil in den Prozeß zurückführt.

22. Verfahren nach mindestens einem der Ansprüche 1 bis 21,
**dadurch gekennzeichnet,**
**daß** man die destillative Aufarbeitung in einer ein- oder mehrstufigen Destillation durchführt.

23. Verfahren nach mindestens einem der Ansprüche 1 bis 22,
**dadurch gekennzeichnet,**
**daß** man für die destillative Aufarbeitung Dünnschichtverdampfer und/oder Destillationskolonnen einsetzt.

24. Verfahren nach mindestens einem der Ansprüche 1 bis 23,
**dadurch gekennzeichnet,**
**daß** man die mono-vinylierte Silicium-organische Verbindung gewinnt.

25. Verfahren nach mindestens einem der Ansprüche 1 bis 24,
**dadurch gekennzeichnet,**
**daß** man die di-vinylierte Silicium-organische Verbindung gewinnt.

26. Verfahren nach mindestens einem der Ansprüche 1 bis 25,
**dadurch gekennzeichnet,**
**daß** man eine mehrfach-vinylierte Silicium-organische Verbindung gewinnt.

27. Verfahren nach mindestens einem der Ansprüche 1 bis 26,
**dadurch gekennzeichnet,**
**daß** man die Aufarbeitung des Reaktionsgemisches unter vermindertem Druck durchführt.

28. Verfahren nach mindestens einem der Ansprüche 1 bis 27,
**dadurch gekennzeichnet,**
**daß** man das Verfahren kontinuierlich führt.

## Claims

1. A process for preparing an organosilicon compound which contains at least one H₂C=CH-Si- group, by reacting an organosilicon compound which contains at least one H-Si- group with acetylene in a gas/liquid phase in the presence of at least one addition catalyst and extracting the organosilicon compound which contains at least one H₂C=CH-Si-group from the reaction mixture,
**characterized in that**
an organosilicon compound which contains at least one H-Si- group, the acetylene, which is used in stoichiometric excess, and a substantially inert liquid phase is brought into very intimate contact in a jet tube loop reactor in the presence of a catalyst, and the organosilicon compound which contains at least one H₂C=CH-Si- group is subsequently extracted from the reaction mixture and the excess acetylene is recycled into the process.

2. A process according to claim 1,
**characterized in that**
the organosilicon compound which contains at least one H-Si- group is fed into the jet tube loop reactor together with the acetylene and/or with the liquid phase.

3. A process according to claim 1 or 2,
**characterized in that**
the organosilicon compound which contains at least one H-Si- group and the acetylene, prior to being fed into the jet tube loop reactor, are converted into a gaseous mixture.

4. A process according to at least one of claims 1 to 3,
**characterized in that**
the substantially inert liquid phase is preheated before being fed into the jet tube loop reactor.

5. A process according to at least one of claims 1 to 4,
**characterized in that**
the jet tube loop reactor is operated at a temperature in the range of from 50 to 200°C, preferably from 70 to 140°C.

6. A process according to at least one of claims 1 to 5,
**characterized in that**
the acetylene is fed into the process at an operating pressure of > 1 bar abs. and ≤ 1.4 bar abs.

7. A process according to at least one of claims 1 to 6,
**characterized in that**
the jet tube loop reactor is operated at a system pressure of from > 1 bar abs. to the maximum permitted pressure as defined by GMP for acetylene at the reaction temperature, preferably at from 1 to 3 bar abs.

8. A process according to at least one of claims 1 to 7,
**characterized in that**
the liquid phase used is a substantially inert solvent or solvent mixture.

9. A process according to claim 8,
**characterized in that**
the respective solvent in the liquid phase has a higher boiling point than the organosilicon compound which is extracted from the reaction mixture and contains at least one H₂C=CH-Si- group.

10. A process according to claim 8 or 9,
**characterized in that**
the solvent used is mesitylene.

11. A process according to at least one of claims 8 to 10,
**characterized in that**
the solvent used comprises inert heat transfer oils, preferably tritoluene.

12. A process according to at least one of claims 1 to 11,
**characterized in that**
a homogeneous catalyst is employed.

13. A process according to claim 12,
**characterized in that**
the homogeneous catalyst is dissolved in the liquid phase.

14. A process according to at least one of claims 1 to 11,
**characterized in that**
a heterogeneous catalyst is employed.

15. A process according to claim 14,
**characterized in that**
the heterogeneous catalyst is placed in the jet tube loop reactor.

16. A process according to at least one of claims 1 to 15,
**characterized in that**
a platinum-containing catalyst is employed.

17. A process according to at least one of claims 1 to 16,
**characterized in that**
the organosilicon compound employed which contains at least one. H-Si- group is a hydrosilane of the general formula I
RₐX_{b}H_{(4-a-b-c)}SiY_{c} (I),
where
R= alkyl group having from 1 to 8 C atoms, haloalkyl group or aryl group, R being identical or different,
X= Cl, OH, alkoxy group having from 1 to 4 C atoms,
Y= - ((CH₂)_{d}SiR₂')ₑ(CH₂)_{d}SiR₃', where R' = H, R and X,
R' being identical or different and d = 1, 2, 3 or 4 and e = 0, 1 or 2,
a= 0, 1, 2 or 3,
b= 0, 1, 2 or 3,
c= 0 or 1, where (a+b+c)≤3,
or a hydrosiloxane of the general formula II
RₐX_{b}H_{(3-a-b)}SiY (II),
where
R= alkyl group having from 1 to 8 C atoms, haloalkyl group or aryl group, R being identical or different,
X= Cl, OH, alkoxy group having from 1 to 4 C atoms,
Y= (-O-SiR₂')_{f}-O-SiR₃', where R'= H, R and X, R' being identical or different and f = 0, 1, 2, 3, 4 or 5,
a= 0, 1 or 2,
b= 0, 1 or 2, where (a+b)≤2,
or a cyclic hydrosiloxane of the general formula III
[R_{q}XᵣH_{(2-q-r)}Si-O-]ₛ (III),
where
R= alkyl group having from 1 to 8 C atoms, haloalkyl group or aryl group, R being identical or different,
X= Cl, OH, alkoxy group having from 1 to 4 C atoms,
q= 0 or 1,
r= 0 or 1, where (q+r) ≤ 1,
s= 3 or 4.

18. A process according to at least one of claims 1 to 17,
**characterized in that**
the organosilicon compound employed is a starting material which essentially comprises methyldichlorosilane or dimethylchlorosilane or mixtures thereof, or is dichlorosilane or tetramethyldisiloxane.

19. A process according to at least one of claims 1 to 18,
**characterized in that**
the organosilicon compound which contains at least one H-Si- group is employed in a purity of from 10 to 100%.

20. A process according to at least one of claims 1 to 19,
**characterized in that**
the molar ratio of acetylene to the respective organosilicon compound which contains at least one H-Si- group is set to a value of between 1.5:1 and 20:1.

21. A process according to at least one of claims 1 to 20,
**characterized in that**
work-up of the reaction mixture to extract the organosilicon compound which contains at least one H₂C=CH-Si- group is carried out by distillation and the liquid phase which, in the process, accumulates in the bottom product is largely recycled into the process.

22. A process according to at least one of claims 1 to 21,
**characterized in that**
the work-up by distillation is carried out in a single- or multi-stage distillation.

23. A process according to at least one of claims 1 to 22,
**characterized in that**
the work-up by distillation employs thin-film evaporators and/or distillation columns.

24. A process according to at least one of claims 1 to 23,
**characterized in that**
the monovinylated organosilicon compound is extracted.

25. A process according to at least one of claims 1 to 24,
**characterized in that**
the divinylated organosilicon compound is extracted.

26. A process according to at least one of claims 1 to 25,
**characterized in that**
a polyvinylated organosilicon compound is extracted.

27. A process according to at least one of claims 1 to 26,
**characterized in that**
the work-up of the reaction mixture is carried out under reduced pressure.

28. A process according to at least one of claims 1 to 27,
**characterized in that**
the process is operated continuously.

## Revendications

1. Procédé de préparation de composés organiques du silicium qui contiennent au moins un groupe H₂C=CH-Si, par réaction d'un composé organique du silicium qui contient au moins un groupe H-Si, avec l'acétylène en phase gazeuse/liquide en présence d'au moins un catalyseur d'addition et extraction du composé organique du silicium qui contient au moins un groupe H₂C=CH-Si, à partir du mélange réactionnel,
**caractérisé en ce qu'**
on rassemble un composé organique du silicium qui contient au moins un groupe H-Si, de l'acétylène qu'on met en oeuvre en excès, et une phase liquide largement inerte dans un réacteur à écoulement à bulles avec éjecteur, en présence d'un catalyseur le plus intimement et on extrait ultérieurement le composé organosilicique qui contient au moins un groupe H₂C=CH-Si du mélange réactionnel et on ramène l'acétylène en excès dans le processus.

2. Procédé selon la revendication 1,
**caractérisé en ce qu'**
on ramène le composé organique du silicium qui contient au moins un groupe H-Si avec l'acétylène et/ou avec la phase liquide, au réacteur à écoulement à bulles avec éjecteur.

3. Procédé selon l'une quelconque des revendications 1 ou 2,
**caractérisé en ce qu'**
on transfère le composé organique du silicium qui contient au moins un groupe H-Si, et l'acétylène avant l'amenée dans le réacteur à écoulement à bulles avec éjecteur, dans un mélange gazeux.

4. Procédé selon l'une quelconque des revendications 1 à 3,
**caractérisé en ce qu'**
on préchauffe la phase largement inerte de liquide avant l'amenée dans le réacteur à écoulement à bulles avec éjecteur.

5. Procédé selon l'une quelconque des revendications 1 à 4,
**caractérisé en ce qu'**
on met en fonctionnement le réacteur à écoulement à bulles avec éjecteur à une température dans la plage comprise entre 50 et 200°C, de préférence entre 70 et 140°C.

6. Procédé selon l'une quelconque des revendications 1 à 5,
**caractérisé en ce qu'**
on amène l'acétylène au processus à une pression de fonctionnement entre > 1 bar abs. et ≤ 1,4 bar abs., au processus.

7. Procédé selon l'une quelconque des revendications 1 à 6,
**caractérisé en ce qu'**
on met en fonctionnement le réacteur à écoulement à bulles avec éjecteur, à une pression du système comprise entre > 1 bar abs. et la pression autorisée au maximum pour l'acétylène selon les règles techniques connues à la température ambiante, de préférence entre 1 et 3 bars abs.

8. Procédé selon l'une quelconque des revendications 1 à 7,
**caractérisé en ce qu'**
on met en oeuvre comme phase liquide, un solvant ou un mélange de solvants largement inerte.

9. Procédé selon la revendication 8,
**caractérisé en ce que**
le solvant respectif dans la phase liquide possède un point d'ébullition plus élevé que le composé organique du silicium qui est extrait du mélange réactionnel et qui contient au moins un groupe H₂C=CH-Si.

10. Procédé selon l'une quelconque des revendications 8 ou 9,
**caractérisé en ce qu'**
on met en oeuvre comme solvant, du mésitylène.

11. Procédé selon l'une quelconque des revendications 8 à 10,
**caractérisé en ce qu'**
on met en oeuvre comme solvant des huiles caloporteuses, de préférence le trinitrotoluène.

12. Procédé selon l'une quelconque des revendications 1 à 11,
**caractérisé en ce qu'**
on met en oeuvre un catalyseur homogène.

13. Procédé selon la revendication 12,
**caractérisé en ce qu'**
on dissout le catalyseur homogène dans la phase liquide.

14. Procédé selon l'une quelconque des revendications 1 à 11,
**caractérisé en ce qu'**
on met en oeuvre un catalyseur hétérogène.

15. Procédé selon la revendication 14,
**caractérisé en ce qu'**
on dispose le catalyseur hétérogène dans le réacteur à écoulement à bulles avec éjecteur.

16. Procédé selon l'une quelconque des revendications 1 à 15,
**caractérisé en ce qu'**
on met en oeuvre un catalyseur contenant du platine.

17. Procédé selon l'une quelconque des revendications 1 à 16,
**caractérisé en ce qu'**
on met en oeuvre comme composé organique du silicium, un composé qui contient au moins un groupe H-Si, un hydrogénosilane de formule générale I,
Rₐ X_{b} H_{(4-a-b-c)} Si Y_{c} (I)
avec,
R : est un alkyle ayant de 1 à 8 atomes de carbone, un groupe halogénoalkyle, ainsi qu'un groupe aryle dans lesquels R est identique ou différent,
X : est Cl⁻, OH⁻, un groupe alkoxy ayant de 1 à 4 atomes de carbone,
Y : est -((CH₂)_{d} Si R₂')_{c} (CH₂)_{d} Si R₃' avec R' = H, R ainsi que X, dans laquelle R' est identique ou différent et d est = 1, 2, 3 ou 4 et e = 0, 1, ou 2
a: est 0, 1 , 2 ou 3
b: est O, 1, 2 ou 3 et
c: est 0 ou 1 (dans lesquels a + b + c est ≤ 3) ou un hydrogénosiloxane de formule générale
Rₐ X_{b} H_{(3-a-b)} Si Y (II)
avec,
R : est un groupe alkyle ayant de 1 à 8 atomes de carbone, un groupe halogénoalkyle, ainsi qu'un groupe aryle dans lesquels R est identique ou différent,
X : est Cl-, OH-, un groupe alkoxy ayant de 1 à 4 atomes de carbone,
Y : est (-O-Si R'₂)f-O-Si R'₃, avec R': H, R ainsi que X, dans lesquels R' est identique ou différent et f = 1, 2, 3, 4 ou 5 et
a : est 0, 1, ou 2
b : est O, 1 ou 2 pour lesquels (a+b) ≤ 2
ou un hydrogénosiloxane cyclique de formule générale III,
[R_{q} Xᵣ H_{(2-q-r)} Si-O-]ₛ (III)
avec R est un groupe alkyle ayant de 1 à 8 atomes de carbone, un groupe halogénoalkyle ainsi qu'un groupe aryle dans lesquels R est identique ou différent,
X : est Cl-, OH-, un groupe alkoxy ayant de 1 à 4 atomes de carbone,
q : est 0 ou 1
r : est 0 ou 1 pour lesquels (q+r) est ≤ 1
s : est 3 ou 4.

18. Procédé selon l'une quelconque des revendications 1 à 17,
**caractérisé en ce qu'**
on met en oeuvre comme composé organique du silicium un éduit contenant essentiellement du méthyldichlorosilane, ou du diméthylchlorosilane ou leurs mélanges ou du dichlorosilane ou du tétraméthyldisiloxane.

19. Procédé selon l'une quelconque des revendications 1 à 18,
**caractérisé en ce qu'**
on met en oeuvre le composé organique du silicium qui contient au moins un groupe H-Si, avec une pureté de 10 à 100 %.

20. Procédé selon l'une quelconque des revendications 1 à 19,
**caractérisé en ce qu'**
on ajuste le rapport molaire de l'acétylène au composé organique du silicium respectif qui contient au moins un groupe H-Si, à une valeur comprise entre 1,5:1 et 20:1.

21. Procédé selon l'une quelconque des revendications 1 à 20,
**caractérisé en ce qu'**
on effectue le traitement du mélange réactionnel par distillation pour l'extraction du composé organique du silicium contenant au moins un groupe H₂C = Si et la phase liquide qui se produit de cette manière dans le pot, est recyclée en partie prépondérante dans le processus.

22. Procédé selon l'une quelconque des revendications 1 à 21,
**caractérisé en ce qu'**
on effectue le traitement par distillation mono-multiétagée.

23. Procédé selon l'une quelconque des revendications 1 à 22,
**caractérisé en ce qu'**
on met en oeuvre pour le traitement par distillation un évaporateur en couche mince et/ou une colonne de distillation.

24. Procédé selon l'une quelconque des revendications 1 à 23,
**caractérisé en ce qu'**
on extrait le composé organique du silicium monovinylé.

25. Procédé selon l'une quelconque des revendications 1 à 24,
**caractérisé en ce qu'**
on extrait le composé organique du silicium divinylé.

26. Procédé selon l'une quelconque des revendications 1 à 25,
**caractérisé en ce qu'**
on extrait un composé organique du silicium plusieurs fois vinylé.

27. Procédé selon l'une quelconque des revendications 1 à 26,
**caractérisé en ce qu'**
on effectue le traitement du mélange réactionnel sous pression réduite.

28. Procédé selon l'une quelconque des revendications 1 à 27,
**caractérisé en ce qu'**
on conduit le procédé en continu.
